(19) Europäisches Patentamt
European Patent Office
Office européen des brevets

(11) **EP 2 685 602 A1**

(12) **EUROPEAN PATENT APPLICATION**

(43) Date of publication:
**15.01.2014 Bulletin 2014/03**

(51) Int Cl.:
*H02K 1/12* (2006.01)      *H02K 3/28* (2006.01)
*H02K 16/04* (2006.01)      *H02K 11/00* (2006.01)
*H02K 7/18* (2006.01)

(21) Application number: **12176337.9**

(22) Date of filing: **13.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Technology Ltd
8050 Zürich (CH)**

(72) Inventors:
• **Chin, Robert
722 46 Västerås (SE)**

• **Svechkarenko, Dmitry
172 65 Sundbyberg (SE)**
• **Islam, Jahirul
722 22 Västerås (SE)**

(74) Representative: **Savela, Reino Aleksi
ABB AB
Intellectual Property
Ingenjör Bååths Gata 11
721 83 Västerås (SE)**

(54) **A wind generator configuration and a method for controlling a wind generator configuration**

(57) A wind powered generator configuration comprises a generator (12) to be operatively connected (32) to a wind turbine (31), the generator comprising a rotor (12b) and a stator, wherein the stator is divided in a circumferential direction into a plurality of stator segments (12a), wherein each of the stator segments extends axially from one end to another end of the stator and each of the stator segments is electrically separated from one another. The configuration comprises further, for each of the stator segments, a power converter (13) operatively connected to that stator segment; and a control arrangement (14) provided for connecting and disconnecting the stator segments through the power converters (13) in response to varying mechanical power produced by the wind turbine.

Fig. 1

EP 2 685 602 A1

## Description

## TECHNICAL FIELD

The present invention is related to the field of electric power generation and more specifically to wind power plants, to generator configurations used in such plants, and to control methods applied in these generator configurations.

## BACKGROUND OF THE INVENTION AND DESCRIPTION OF RELATED ART

The environmental concern about the extensive use of fossil fuels, as well as the unsolved issues of energy security have led to the increased interest in the renewable energy sources, especially in wind and solar power. As a result, the share of wind power in the world energy mix has been continuously growing worldwide during the past decades. This increase accounts for both the number of new turbines installed and the larger power rating. The higher penetration ratio of wind power can also be achieved through a more efficient energy conversion.

Different types of wind turbines are available on the market: the fixed-speed and variable-speed. The fixed-speed turbines are older and based on a relatively simple technology, and they are often optimized for a given wind speed range at which the highest efficiency can be achieved. The variable-speed turbines have the possibility to control the frequency and the amount of electricity production. This type of turbines would however require a more complicated electrical system. The variable speed turbines can also be designed for a broader wind speed range.

Different methods are available to control the rotational speed of the turbine. For example, in the fixed-speed turbines with the gearbox and induction generator, the stator windings can be switched from a four-pole arrangement to a six-pole arrangement, thus the speed can be changed from 1500 rpm to 1000 rpm for a 50 Hz supply in a stepwise manner. In the turbines utilizing the doubly-fed induction generator, the speed can vary in the wider range. This can be achieved thanks to the power converter connected to the rotor winding. Depending on the converter nominal power, the speed can vary within the interval between 40% below and 30% above the synchronous speed. In the turbines with the synchronous generators and full-scaled power converter the speed can be controlled over a wider range.

Independently on the wind turbine concept, the efficient energy conversion, especially during the partial load conditions, is one of the most important figures of merits.

US 4,585,950 discloses a wind turbine concept of the fixed-speed type in which multiple induction generators are drivingly connected to an impeller. As wind velocity increases, the generators are successively activated until all of the generators are operating at the maximum wind velocity. As the wind velocity decreases, the generators are successively de-activated until all of the generators are inoperative below the minimum wind velocity. Wind energy is more efficiently converted into electric power where impeller rpm must be maintained substantially constant under varying wind conditions to achieve the desired constant phase of the ac output.

## SUMMARY

For a typical wind turbine, the operating condition at the rated power or above is around 5% at maximum per annum, i.e. the condition at which the output power is equal to the turbine rating. Most of the energy is produced at partial loads between e.g. 35% to 75% of the rated power, which underlines the importance of having better energy conversion and higher efficiency during these partial load operating ranges. In general, the generator is designed according to the rated power and the efficiency is hence optimized for the rated power. From a power conversion point of view, the additional energy that could be produced is given by the difference in efficiency multiplied with the input power and the number of operating hours.

The concept using multiple induction generators as disclosed in US 4,585,950 achieves higher system efficiency and increased electric power generated for a varying wind speed. However, the benefits are achieved to the cost of provision of a very complex scheme with a multiple number of induction generators and a large number of mechanical couplings and electrical excitation units. This would obviously affect the cost and might lead to lower system reliability and efficiency.

Further, if a failure is occurred in, for example, the stator winding, the entire generator has to be disconnected or else the efficiency could drop considerably.

It is therefore required to develop a generator configuration, which can achieve high system efficiency and high electric power generated at nominal and partial load conditions, but which can overcome the drawbacks and shortcomings of the concept disclosed in US 4,585,950.

In one aspect, a wind generator configuration comprises a generator, particularly a synchronous generator such as a permanent magnet synchronous generator, operatively connected to a wind turbine, the generator comprising a rotor and a stator, wherein the stator is divided radially into a plurality of stator segments, wherein each of the stator segments is electrically separated from the remaining stator segments e.g. by means of having stator winding with galvanic insulation. Each of the stator segments is operatively connected to an individual power converter, and a control arrangement is provided which is configured to connect and disconnect the stator segments in response the mechanical power produced by the wind turbine. The generator may advantageously be directly-driven, meaning that no gearbox is used between the wind turbine shaft and the generator. Each of the stator segments may have a power rating which is essentially the power rating of the wind turbine divided with the number of the stator segments.

The number of the stator segments may be at least 4, preferably at least 6, and more preferably at least 8. The more segments provided, the better overall efficiency could be obtained.

In one embodiment, the control arrangement is arranged for successively connecting the stator segments in response to the increased mechanical power produced by the wind turbine, and for successively disconnecting the stator segments in response to the decreased mechanical power produced by the wind turbine.

In particular, the control arrangement may be arranged (i) for connecting a first one of the stator segments when the mechanical power delivered by the wind turbine exceeds a first threshold value; (ii) for successively connecting additional ones of the stator segments in response to the increased mechanical power produced by the wind turbine until all of the stator segments are connected when the mechanical power produced by the wind turbine exceeds a second higher threshold value; (iii) for disconnecting a first one of the stator segments when the mechanical power produced by the wind turbine falls below the second threshold value; and (iv) for successively disconnecting additional ones of the stator segments in response to the decreased mechanical power produced by the wind turbine until all of the stator segments are disconnected when the mechanical power produced by the wind turbine is below the first threshold value.

The terminals of power converters can be connected to the dc-bus comprising one or several capacitors. The capacitor/capacitors is/are further connected to the dc/ac inverter that in turn is connected to the electric grid.

In a further aspect, a wind power plant comprises the generator configuration operatively connected to the wind turbine as disclosed above.

In yet a further aspect, a method of controlling a wind powered generator configuration comprising a generator operatively connected to a wind turbine, the generator comprising a rotor and a stator, the stator being divided in a circumferential direction into a plurality of stator segments, wherein each of the stator segments is electrically separated from the remaining stator segments, each of the stator segments is operatively connected to an individual power converter, and a control arrangement is operatively connected to the power converters. According to the method the plurality of stator segments are connected and disconnected by means of the control arrangement in response to the varying mechanical power produced by the wind turbine.

Each of the above aspects provides for high system reliability and high electric power efficiency for a varying wind speed and various partial load conditions.

Especially for large wind turbines, the above disclosed segmented approach can be further adopted due to its inherent modularity, i.e. each segment can be viewed as a separate unit or machine. This modularity can be used for an energy efficient concept for the overall energy conversion when considering the partial load operation throughout the energy production cycles.

No complex scheme with a multiple number of induction generators and a large number of mechanical couplings and electrical excitation units are required.

Already existing generators with segmented stator sections can be used in the above disclosed segmented approach without large modifications.

The redundant nature of the concept as each segment is connected to a separate power converter with equal reduced power rating is valuable. The generator configuration can maintain power generation in cases where one or some of the stator segments are disconnected due to failure while awaiting the next scheduled maintenance.

Further characteristics and advantages will be evident from the following detailed description of embodiments given hereinafter and the accompanying Figs. 1-3, which are given by way of illustration only, and are thus not limitative.

## BRIEF DESCRIPTION OF THE DRAWINGS

Fig. 1 is a schematic view of a generator configuration according to an embodiment.

Fig. 2 is a diagram of efficiency versus load for the generator configuration of Fig. 1 as compared to a prior art generator configuration.

Fig. 3 is a schematic block diagram of a wind power plant comprising a generator configuration according to an embodiment.

Identical reference numerals are used throughout the Figures to denote identical or similar components, portions, details and the like of the embodiments.

## DETAILED DESCRIPTION OF EMBODIMENTS

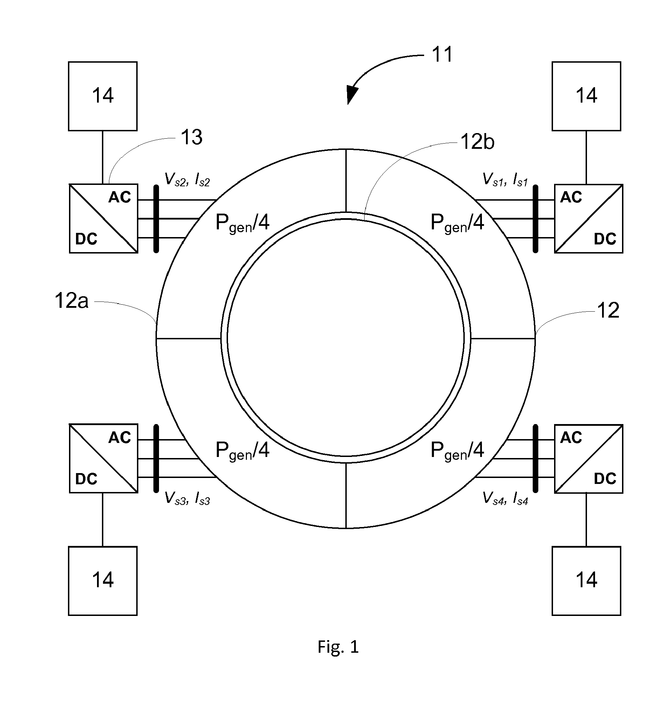

Fig. 1 is a schematic view of a generator configuration 11 comprising a generator 12 and a plurality of power converters 13.

The generator 12, which may be a synchronous generator such as a permanent magnet or a field-wound synchronous generator, comprises a rotor 12b to be operatively connected, e.g. to a wind turbine (not illustrated in Fig. 1) and a stator, which is divided radially into a plurality of stator segments 12a, wherein each of the stator segments 12a extends axially from one end to another end of the stator and each has essentially the cross-sectional shape of a ring sector, i.e. the area of a circle sector of a circle lying outside an inner concentrically located circle. The stator segments 12a are lying next to one another in a tangential or circumferential direction. The generator 12 is preferably direct-driven by the wind turbine.

Each of the stator segments 12a is electrically separated from one another, e.g., by being provided with separate stator windings with separate connections.

The output from each of the stator segments 12a is operatively connected to the respective power converter 13, wherein thus the number of stator segments 12a is equal to the number of power converters 13. In the illustrated case, the number is 4, but alternatively, the number is different such as at least 4, at least 6, or at least 8.

A control arrangement comprising a plurality of control units 14 is provided to control the power converters 13, i.e. one control unit 14 may be provided for the control of one power converter 13. In particular, the control units 14 are arranged to connect and disconnect the stator segments 12a through the power converters 13 in response to the varying mechanical power produced by the wind turbine.

For instance, the control units 14 can be arranged to connect and disconnect the stator segments 12a in response to the rotational speed of the wind turbine, to the torque of the wind turbine, to a combination of these, to an expected power generation based e.g. on the wind conditions and/or, to the actual power generated by the generator configuration 11.

Each of the stator segments 12a is advantageously similar in size and has a power rating which is essentially the power rating of the wind turbine divided with the number of the stator segments 12a such that the entire generator 12 will have a power rating, which is equal to the power rating of the wind turbine.

Generally, for a given segmented machine, each segment 12a can (together with the rotor 12b or part thereof) be viewed as a separate machine with

$$P_{seg} = P_{tur}/N = P_{gen}/N$$

where N is the number of segments, $P_{seg}$ is the rated power for each single segment, $P_{tur}$ is the overall power rating of the turbine, and $P_{gen}$ is the overall power rating of the generator. It shall be appreciated that each of the power converters ought to have a power rating, which is equal to the power rating of the individual segment 12a.

The exemplary case with four segments or modular units as shown in Fig. 1 will thus have stator segments 12a and power converters 13 with a rated power of $P_{gen}/4$.

Generally, the control units 14 are typically arranged to successively connect the stator segments 12a as the mechanical power produced by the wind turbine increases, and to successively disconnect the stator segments 12a as the mechanical power produced by the wind turbine decreases.

In one version, the control units 14 are arranged (i) to connect a first one of the stator segments 12a when the mechanical power produced by the wind turbine exceeds a first threshold value; (ii) to successively connect additional ones of the stator segments 12a in response to the increased mechanical power produced by the wind turbine until all of the stator segments 12a are connected when the mechanical power produced by the wind turbine exceeds a second higher threshold value; (iii) to disconnect a first one of the stator segments 12a when the mechanical power produced by the wind turbine falls below the second threshold value; and (iv) to successively disconnect additional ones of the stator segments 12a as the mechanical power produced by the wind turbine decreases until all of the stator segments 12a are disconnected when the mechanical power produced by the wind turbine is below the first threshold value.

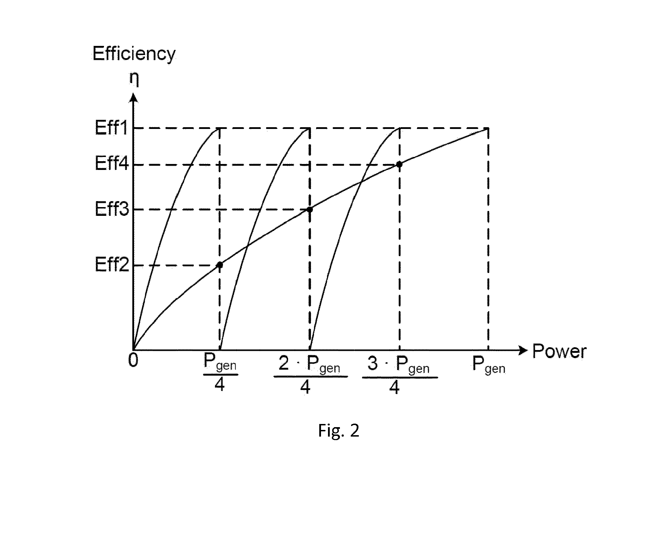

Fig. 2 is a diagram of efficiency versus load for the generator configuration of Fig. 1 as compared to a prior art generator configuration, wherein $P_{gen}$ is as above the overall power rating of the generator. The curve with lower slope is a typical efficiency versus load curve for a prior art generator, whereas the curves with higher slope are efficiency versus load curves for the individual segments of the segmented generator concept with the separated windings connected to separate power converters.

Fig. 2 can be considered to explain the potential benefits of higher power generation at the partial load for the segmented generator configuration as compared to a conventional generator with the same given overall power rating. Four different loads are considered: 25 %, 50 %, 75 %, and 100 % of the overall rated load.

Case 1: At 25% of the rated load, i.e. $P_{gen}/4$, the additional power generation by the segmented generator configuration is (Eff1 - Eff2)*$P_{gen}/4$.

Case 2: At 50% of the rated load, i.e. $P_{gen}/2$, the additional power generation by the segmented generator configuration is (Eff1 - Eff2)*$P_{gen}/4$ + (Eff1 - Eff3) *$P_{gen}/4$ = ((2*Eff1) - Eff2 - Eff3)*$P_{gen}/4$.

Case 3: At 75 % of the rated load, i.e. $P_{gen}/4$, the additional power generation by the segmented generator configuration is (Eff1 - Eff2)*$P_{gen}/4$ + (Eff1 - Eff3) *$P_{gen}/4$ + (Eff1 - Eff4)*$P_{gen}/4$ = ((3*Eff1) - Eff2 - Eff3 - Eff4)*$P_{gen}/4$

Case 4: at 100% of the rated load, no additional power generation by the segmented generator configuration is achieved as expected since the overall power generated is equal at the rated power based on the same efficiency.

Typically, the control units 14 are arranged to connect and disconnect the stator segments 12a such that the maximum power is generated at each instant having the efficiency versus load diagram in mind.

Thus, a further segment 12a may be connected as soon as the output power approaches or reaches

$n*P_{gen}/4$ while the power is increasing, n = 1, 2, 3, and a further segment 12a may be disconnected as soon as the output power approaches or reaches $n*P_{gen}/4$ while the power is decreasing.

It shall be appreciated that the more machine segments that are provided, the higher power can be generated.

Generally, a further segment may be connected as soon as the output power approaches or reaches $n*P_{gen}/N$ while the power is increasing, n = 1, 2, 3, ..., N-1 and a further segment may be disconnected as soon as the output power approaches or reaches $n*P_{gen}/N$ while the power is decreasing.

Moreover, the redundant nature of the concept can also be highlighted as each segment is connected to a separate power converter with equal reduced power rating. The turbine can maintain power generation in cases where one or some of the segments are disconnected due to failure while awaiting the next scheduled maintenance. This additional power generation that can be achieved between the service intervals is also very beneficial.

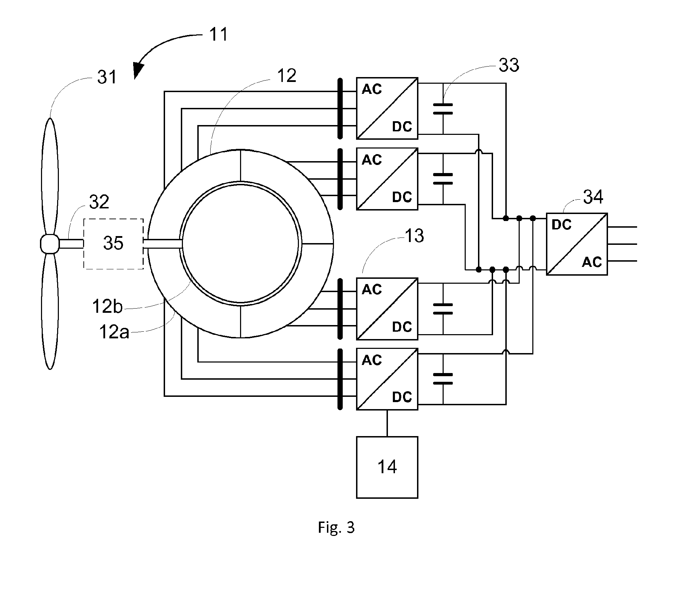

Fig. 3 is a schematic block diagram of a wind power plant comprising the generator configuration 11 connected to the wind turbine 31 via a shaft 32 and, if applicable, a gearbox 35. The generator configuration 11 comprises the generator 12 including the rotor 12b and the stator segments 12a and the power converters 13 connected to the control units 14, here schematically only one control unit 14 is shown. Further, a dc-bus comprising one or several capacitors, schematically indicated 33, is provided. A further power converter 34 is connected to the outputs of the power converters 13 via the dc-bus 33, and is also connectable to the electric power grid on another side.

The invention is not in any way restricted to the embodiments described above, but a large variety of modifications thereof would be apparent to a person with ordinary skill in the art without departing from the basic idea of the invention as defined in the appended claims.

**Claims**

1.   A wind powered generator configuration comprising:

- a generator (12) operatively connected (32) to a wind turbine (31), the generator comprising a rotor (12b) and a stator, characterized i n that
- the stator is divided in a circumferential direction into a plurality of stator segments (12a), wherein each of the stator segments is electrically separated from the remaining stator segments;
- each of the stator segments is operatively connected to an individual power converter (13); and
- a control arrangement (14) is provided which is configured to connect and disconnect the stator segments in response to the varying mechanical power produced by the wind turbine.

2.   The configuration of claim 1 wherein each of the stator segments has a power rating which is essentially the power rating of the wind turbine divided with the number of the stator segments.

3.   The configuration of claim 1 or 2 wherein the number of the stator segments is at least 4, preferably at least 6, and more preferably at least 8.

4.   The configuration of any of claims 1-3 wherein each of the stator segments has a separate stator winding.

5.   The configuration of any of claims 1-4 wherein the control arrangement is connectable to the wind turbine and is connected to the generator and to each of the power converters.

6.   The configuration of any of claims 1-5 wherein the control arrangement is arranged for successively connecting the stator segments when the mechanical power produced by the wind turbine increases; and for successively disconnecting the stator segments when the mechanical power produced by the wind turbine decreases.

7.   The configuration of any of claims 1-6 wherein the control arrangement is arranged

- for connecting a first one of the stator segments when the mechanical power produced by the wind turbine exceeds a first threshold value;
- for successively connecting additional ones of the stator segments as the mechanical power produced by the wind turbine increases until all of the stator segments are connected when the mechanical power produced by the wind turbine exceeds a second higher threshold value;
- for disconnecting a first one of the stator segments when mechanical power produced by the wind turbine falls below the second threshold value; and
- for successively disconnecting additional ones of the stator segments as the mechanical power produced by the wind turbine decreases until all of the stator segments are disconnected when the mechanical power produced by the wind turbine is below the first threshold value.

8.   The configuration of any of claims 1-7 comprising a dc-bus (33).

9.   The configuration of claim 8 comprising a further power converter (34) connected to the outputs of the power converters (13) through the dc-bus (33).

10. The configuration of any of claims 1-9 wherein the generator is a synchronous generator.

11. A wind power plant comprising the generator configuration (11) of any of claims 1-10 operatively connected to the wind turbine (31).

12. A method of controlling a wind powered generator configuration (11) comprising a generator (12) operatively connected (32) to a wind turbine (31), the generator comprising a rotor (12b) and a stator, the stator being divided in a circumferential direction into a plurality of stator segments (12a), wherein each of the stator segments is electrically separated from the remaining stator segments, each of the stator segments is operatively connected to an individual power converter (13), and a control arrangement (14) is operatively connected to the power converters (13), the method comprising the step of:

   - connecting and disconnecting the plurality of stator segments by means of the control arrangement in response to the varying mechanical power produced by the wind turbine.

13. The method of claim 12 wherein each of the stator segments has a power rating which is essentially the power rating of the wind turbine divided with the number of the stator segments.

14. The method of claim 12 or 13 wherein the stator segments are successively connected when the mechanical power produced by the wind turbine increases; and the stator segments are successively disconnected when the mechanical power produced by the wind turbine decreases.

15. The method of any of claims 12-14 wherein

   - a first one of the stator segments is connected when the mechanical power produced by the wind turbine exceeds a first threshold value;
   - additional ones of the stator segments are successively connected as the mechanical power produced by the wind turbine increases until all of the stator segments are connected when the mechanical power produced by the wind turbine exceeds a second higher threshold value;
   - a first one of the stator segments is disconnected when mechanical power produced by the wind turbine falls below the second threshold value; and
   - additional ones of the stator segments are successively disconnected as the mechanical power produced by the wind turbine decreases until all of the stator segments are disconnected when the mechanical power produced by the wind turbine is below the first threshold value.

Fig. 1

Fig. 2

Fig. 3

Europäisches
Patentamt

European
Patent Office

Office européen
des brevets

**EUROPEAN SEARCH REPORT**

Application Number

EP 12 17 6337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 416 604 A2 (BONUS ENERGY AS [DK] SIEMENS AG [DE]) 6 May 2004 (2004-05-06)<br>* paragraphs [0007], [0008], [0014], [0015], [0016]; figure 1 *<br>----- | 1-5,11<br><br>6-10,<br>12-15 | INV.<br>H02K1/12<br>H02K3/28<br>H02K16/04 |
| Y | US 4 906 060 A (CLAUDE DAVID L [US])<br>6 March 1990 (1990-03-06)<br>* column 2, line 22 - line 25 *<br>* column 7, line 26 - line 29 *<br>* column 8, line 5 - line 16 *<br>* claims 1,2; figure 1 *<br>----- | 6,7,<br>12-15 | ADD.<br>H02K11/00<br>H02K7/18 |
| Y | US 2012/133142 A1 (LANGEL ANDRE [DE])<br>31 May 2012 (2012-05-31)<br>* paragraph [0004]; figure 6 *<br>----- | 8-10 | |
| X | WO 2011/109659 A1 (UNIMODAL SYSTEMS LLC [US]; WAMBLE JOHN LEE III [US]; PERKINS CHRISTOPH) 9 September 2011 (2011-09-09)<br>* paragraphs [0016], [0028], [0032], [0066]; figures 2,15 *<br>----- | 1,4 | |
| | | | TECHNICAL FIELDS SEARCHED (IPC)<br><br>H02K |

The present search report has been drawn up for all claims

| Place of search | Date of completion of the search | Examiner |
|---|---|---|
| The Hague | 25 January 2013 | Zoukas, Eleftherios |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

......................................................................................
& : member of the same patent family, corresponding
     document

EPO FORM 1503 03.82 (P04C01)

EP 2 685 602 A1

## ANNEX TO THE EUROPEAN SEARCH REPORT
## ON EUROPEAN PATENT APPLICATION NO.

EP 12 17 6337

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2013

| Patent document cited in search report | | Publication date | Patent family member(s) | | Publication date |
|---|---|---|---|---|---|
| EP 1416604 | A2 | 06-05-2004 | DK 200201682 A | | 01-05-2004 |
| | | | EP 1416604 A2 | | 06-05-2004 |
| US 4906060 | A | 06-03-1990 | NONE | | |
| US 2012133142 | A1 | 31-05-2012 | NONE | | |
| WO 2011109659 | A1 | 09-09-2011 | US 2011291413 A1 | | 01-12-2011 |
| | | | WO 2011109659 A1 | | 09-09-2011 |

EPO FORM P0459

For more details about this annex : see Official Journal of the European Patent Office, No. 12/82

11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4585950 A